# DEMANDE DE BREVET EUROPEEN

(11) **EP 0 667 465 A1**
(43) Date de publication de la demande: **16.08.1995**
(21) Numéro de dépôt: 94403042.8
(22) Date de dépôt: 28.12.1994
(51) Int. Cl.: F16D 69/04

(54) **Patin de freinage et sabot de freinage correspondant**

(30) Priorité: 10.02.1994 FR 9401493
(71) Demandeur: SIME INDUSTRIE, F-18150 La Guerche sur l'Aubois (FR)
(72) Inventeur: Eon, Christian, F-58640 Coulanges les Nevers (FR); Dufour, Gérard, F-18600 Sancoins (FR)
(74) Mandataire: CABINET BONNET-THIRION

(57) **Abrégé**

Le patin de freinage (10) suivant l'invention est du genre comportant une garniture de frottement (12) rapportée sur un support (13).

Suivant l'invention, ce support (13) forme, en creux, au dos de la garniture de frottement (12), une rainure en queue d'aronde (15) femelle, permettant de rapporter de manière amovible l'ensemble sur un sabot de freinage (11) comportant en saillie des moyens de nervure en queue d'aronde (20) mâles complémentaires.

Application, notamment, aux freins à usage industriel.

## Description

La présente invention concerne d'une manière générale les freins tels que ceux destinés par exemple à un usage industriel.

Elle vise plus particulièrement les patins de freinage, ou plaquettes de frein, destinés à l'équipement de tels freins.

Ainsi qu'on le sait, ces patins de freinage comportent globalement une garniture de frottement rapportée sur un support, et ils sont adaptés à être eux-mêmes rapportés de manière amovible sur le sabot de freinage qui les porte pour faciliter leur changement après usure de leur garniture de frottement.

Il a déjà été proposé que le montage correspondant soit un montage en queue d'aronde.

Dans les réalisations de ce type connues à ce jour, le support forme, à cet effet, en relief, au dos de la garniture de frottement, une nervure en queue d'aronde, et, donc, en quelque sorte, une queue d'aronde "mâle".

Il en résulte quasi nécessairement que ce support est une pièce massive, et donc relativement lourde et coûteuse à réaliser.

En outre, ce support ne contrebute efficacement la garniture de frottement que sur une partie de la largeur de celle-ci, en l'espèce sa partie médiane, et, les autres parties de la garniture de frottement se trouvant ainsi en porte à faux, il y a pour elles un risque intempestif de rupture au niveau de ce porte à faux.

Enfin, la poussière et les débris ont tendance à s'accumuler dans les zones en coin existantes, au risque d'un blocage de l'ensemble sur le sabot de freinage par "gommage".

La présente invention a d'une manière générale pour objet une disposition permettant d'éviter ces inconvénients et présentant en outre d'autres avantages.

De manière plus précise, elle a tout d'abord pour objet un patin de freinage du genre comportant une garniture de frottement rapportée sur un support, ce patin de freinage étant d'une manière générale caractérisé en ce que le support forme, en creux, au dos de la garniture de frottement, une rainure en queue d'aronde ; elle a encore pour objet un sabot de freinage caractérisé en ce que, pour recevoir un tel patin de freinage, il comporte, en saillie, des moyens de nervure en queue d'aronde, qui, au moins localement, sont complémentaires, en section transversale hors tout, de la rainure en queue d'aronde de ce patin de freinage.

En bref, suivant l'invention, la queue d'aronde que forme le support du patin de freinage est en quelque sorte une queue d'aronde "femelle", au lieu d'être une queue d'aronde "mâle".

Il en résulte, tout d'abord, que ce support est avantageusement susceptible d'une réalisation particulièrement simple et économique.

En pratique, il peut très simplement être réalisé en tôle pliée.

En outre, ce support est avantageusement à même de contrebuter sur toute sa largeur la garniture de frottement qu'il porte.

De plus, les moyens de nervure en queue d'aronde à prévoir sur le sabot de freinage associé sont eux-mêmes avantageusement susceptibles d'une réalisation particulièrement simple et économique.

Par exemple, ces moyens de nervure peuvent très simplement comporter, voire même être très simplement formés par, au moins, deux saillies coniques faisant toute la largeur de la rainure en queue d'aronde du patin de freinage, ou par deux paires de saillies coniques de largeur moindre, telles que par exemple la tête de vis choisies en conséquence, établies en rectangle à distance l'une de l'autre.

Dans de tels cas, l'espace libre en résultant pour la poussière et les débris pouvant traverser l'ensemble est suffisant pour que le risque d'un blocage par "gommage" soit largement minimisé.

En outre, dans de tels cas, la mise en place du patin de freinage sur le sabot de freinage peut avantageusement être favorisée par un précentrage de celui-ci.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un patin de freinage suivant l'invention ;
la figure 2 en est, à échelle supérieure, une vue en coupe transversale, suivant la ligne II-II de la figure 1 ;
la figure 3 est une vue en coupe transversale analogue à celle de la figure 2, après le montage du patin de freinage suivant l'invention sur le sabot de freinage qu'il doit équiper ;
la figure 4 est une vue partielle en élévation de ce sabot de freinage, suivant la flèche IV de la figure 3 ;
la figure 5 est, avec un arrachement local, une vue partielle de côté d'un patin de freinage suivant l'invention et du sabot de freinage sur lequel il est rapporté, pour une variante de réalisation ;
les figures 6, 7 sont des vues qui, analogues à celle de la figure 5, se rapportent chacune respectivement à d'autres variantes de réalisation ;
la figure 8 est une vue partielle en élévation qui, analogue à celle de la figure 4, se rapporte à une variante de réalisation du sabot de freinage
la figure 9 est, suivant la ligne IX-IX de la figure 8, une vue en coupe transversale pour cette variante de réalisation.

Tel qu'illustré sur ces figures, et de manière connue en soi, le patin de freinage 10 suivant l'invention est destiné à être rapporté de manière amovible sur un sabot de freinage 11, et il comporte, globalement, une garniture de frottement 12 elle-même rapportée de manière fixe, par exemple par collage, sur un support 13.

Dans les formes de réalisation représentées, la garniture de frottement 12 a globalement, en plan, un contour quadrangulaire, et, par exemple, rectangulaire.

Suivant l'invention, le support 13 forme, en creux, au dos de la garniture de frottement 12, une rainure en queue d'aronde 15.

En pratique, dans les formes de réalisation représentées, ce support 13 comporte une partie médiane 16, sur laquelle est rapportée la garniture de frottement 12, et deux ailes latérales 17, qui, s'étendant librement à compter de deux bords 18, parallèles et opposés, de la partie médiane 16, se rapprochent l'une de l'autre au fur et à mesure qu'elles s'éloignent de cette partie médiane 16, en étant l'une et l'autre inclinées sur celle-ci.

En pratique, la partie médiane 16 du support 13 a, en plan, un contour identique à celui de la garniture de frottement 12, et elle contrebute donc cette dernière sur la totalité de sa largeur.

En pratique, également, le support 13 suivant l'invention est d'un seul tenant.

Par exemple, il est très simplement réalisé en tôle pliée.

De préférence, et tel que représenté, ses ailes latérales 17 sont identiques l'une à l'autre, en étant symétriques l'une de l'autre par rapport au plan médian de l'ensemble perpendiculaire à la partie médiane 16, et en faisant donc un même angle aigu A par rapport à celle-ci.

Le patin de freinage 10 suivant l'invention peut ainsi être indifféremment monté longitudinalement dans un sens ou dans l'autre sur le sabot de freinage 11 associé.

Ce sabot de freinage 11 relève, dans son ensemble, de dispositions usuelles.

Il ne sera donc pas décrit dans tous ses détails ici.

Seuls en seront décrits les éléments nécessaires à la compréhension de l'invention.

En pratique, pour recevoir le patin de freinage 10 suivant l'invention, ce sabot de freinage 11 comporte, au moins localement, en saillie, des moyens de nervure en queue d'aronde 20, qui, au moins localement, sont complémentaires, en section transversale hors tout, de la rainure en queue d'aronde 15 de ce patin de freinage 10.

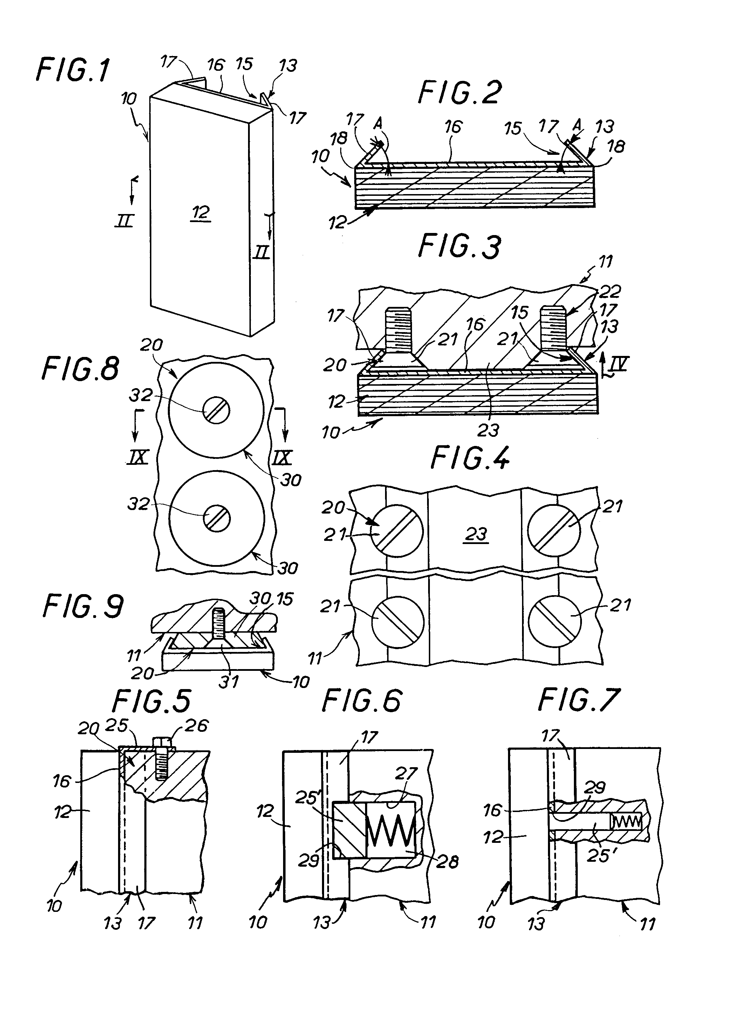

Dans la forme de réalisation plus particulièrement représentée sur les figures 3 et 4, ces moyens de nervure en queue d'aronde 20 comportent au moins deux paires de saillies coniques 21 établies en rectangle à distance l'une de l'autre.

Par exemple, et tel que représenté, ces saillies coniques 21 peuvent très simplement être formées par la tête de vis 22 choisies en conséquence, c'est-à-dire de vis à tête fraisée.

Ces vis 22 sont rapportées par vissage sur le sabot de freinage 11.

Dans la forme de réalisation représentée, les saillies coniques 21 que forme leur tête sont établies de part et d'autre d'un bossage 23 qui, allongé longitudinalement, affleure au moins au niveau de leur surface.

Dans la forme de réalisation représentée, ce bossage 23, dont la propre surface est plate, dépasse légèrement le niveau de la surface des saillies coniques 21.

Quoi qu'il en soit, il contrebute avantageusement le patin de freinage 10 entre ces saillies coniques 21.

Dans la forme de réalisation représentée, le bossage 23 s'étend transversalement en continu de l'une à l'autre des deux rangées que forment les saillies coniques 21.

Autrement dit, ces saillies coniques 21 sont, dans cette forme de réalisation, immédiatement adjacentes au bossage 23.

Ainsi qu'il est aisé de le comprendre, les moyens de nervure en queue d'aronde 20 que forment par leur contour hors tout les saillies coniques 21 constituent globalement une glissière sur laquelle il est possible d'engager longitudinalement par sa rainure en queue d'aronde 15 le patin de freinage 10.

Le bossage 23 facilite cet engagement, en assurant un précentrage du patin de freinage, et, par leur contour arrondi, les saillies coniques 21 d'entrée affinent ce précentrage.

Mais, en variante, les moyens de nervure en queue d'aronde 20 peuvent être constitués par une glissière massive, directement usinée sur le sabot de freinage 11.

C'est le cas, à titre d'exemple, dans les formes de réalisation représentées sur les figures 5 à 7.

En outre, dans ces formes de réalisation, des moyens d'immobilisation sont prévus entre le patin de freinage 10 et le sabot de freinage 11, pour bloquer en translation ce patin de freinage 10 sur ce sabot de freinage 11 et ainsi faire reprendre par ce dernier l'effort de freinage encaissé par le patin de freinage 10.

Par exemple, figure 5, ces moyens d'immobilisation comportent, à chacune des extrémités de la partie médiane 16 du support 13, une patte 25, qui, venue d'un seul tenant de cette partie médiane 16, et pliée à l'équerre, vient porter sur le sabot de freinage 11 et est solidarisée de manière amovible à celui-ci, par exemple par une ou plusieurs vis 26.

En variante, figures 6 et 7, les moyens d'immobilisation mis en oeuvre comportent un verrou 25', qui, monté mobile dans un évidement borgne 27 du sabot de freinage 11, vient s'ancrer, sous la sollicitation de moyens élastiques 28 prenant appui sur le fond de cet évidement borgne 27, dans un logement 29 prévu à cet effet sur le patin de freinage 10.

Par exemple, figure 6, le logement 29 est une échancrure affectant l'une et/ou l'autre des ailes latérales 17 du support 13 de ce patin de freinage 10.

En variante, figure 7, il s'agit d'un évidement ajourant la partie médiane 16 de ce support 13.

Suivant une autre variante non représentée, les moyens d'immobilisation mis en oeuvre comportent par exemple une ou plusieurs butées amovibles, et, par exemple, une ou plusieurs clavettes.

Dans la variante de réalisation représentée sur les figures 8, 9, les moyens de nervure en queue d'aronde 20 du sabot de freinage 11 comportent deux saillies coniques 30, qui, de largeur égale à celle de la rainure en queue d'aronde 15 du patin de freinage 10, sont établies à distance l'une de l'autre.

Par exemple, et tel que représenté, il s'agit de "cimblots", c'est-à-dire de rondelles à tranche tronconique, rapportées par des vis 32 sur le sabot de freinage 11.

La présente invention ne se limite d'ailleurs pas aux formes de réalisation décrites et représentées, mais englobe toute variante d'exécution et/ou de combinaison de leurs divers éléments.

## Revendications

1. Patin de freinage, du genre comportant une garniture de frottement (12) rapportée sur un support (13), caractérisé en ce que, ledit support (13) forme, en creux, au dos de la garniture de frottement (12), une rainure en queue d'aronde (15).

2. Patin de freinage suivant la revendication 1, caractérisé en ce que le support (13) comporte une partie médiane (16), sur laquelle est rapportée la garniture de frottement (12), et deux ailes latérales (17), qui, s'étendant librement à compter de deux bords (18), parallèles et opposés, de la partie médiane (16), se rapprochent l'une de l'autre au fur et à mesure qu'elles s'éloignent de cette partie médiane (16).

3. Patin de freinage suivant la revendication 2, caractérisé en ce que le support (13) est d'un seul tenant.

4. Patin de freinage suivant la revendication 3, caractérisé en ce que le support (13) est en tôle pliée.

5. Patin de freinage suivant l'une quelconque des revendications 2 à 4, caractérisé en ce que la partie médiane (16) du support (13) contrebute la garniture de frottement (12) sur toute sa largeur.

6. Sabot de freinage, caractérisé en ce que, pour recevoir un patin de freinage suivant l'une quelconque des revendications 1 à 5, il comporte, en saillie, des moyens de nervure en queue d'aronde (20), qui, au moins localement, sont complémentaires, en section transversale hors tout, de la rainure en queue d'aronde (15) de ce patin de freinage (10).

7. Sabot de freinage suivant la revendication 6, caractérisé en ce que ses moyens de nervure en queue d'aronde (20) comportent au moins deux paires de saillies coniques (21) établies en rectangle à distance l'une de l'autre.

8. Sabot de freinage suivant la revendication 7, caractérisé en ce que lesdites saillies coniques (21) sont formées par la tête de vis (22).

9. Sabot de freinage suivant l'une quelconque des revendications 7, 8, caractérisé en ce que les saillies coniques (21) sont établies de part et d'autre d'un bossage (23) qui affleure au moins au niveau de leur surface.

10. Sabot de freinage suivant la revendication 9, caractérisé en ce que les saillies coniques (21) sont immédiatement adjacentes au bossage (23).

11. Sabot de freinage suivant la revendication 6, caractérisé en ce que ces moyens de nervure en queue d'aronde (20) comportent deux saillies coniques (30) de largeur égale à celle de la rainure en queue d'aronde (15) du patin de freinage (10).

12. Sabot de freinage suivant l'une quelconque des revendications 6 à 11, caractérisé en ce que, entre le patin de freinage (10) et lui, sont prévus des moyens d'immobilisation (25, 25').
